# EUROPÄISCHE PATENTSCHRIFT

(11) **EP 0 503 292 B1**
(45) Veröffentlichungstag und Bekanntmachung des Hinweises auf die Patenterteilung: **11.05.1994**
(21) Anmeldenummer: 92102306.5
(22) Anmeldetag: 12.02.1992
(51) Int. Cl.: B23K 11/30, H01R 39/64

(54) **Rollenkopf für eine Widerstandsnahtschweissmaschine**
Electrode wheel head for a resistance seam welding machine
Galet de soudage pour une machine de soudage en ligne continue par résistance

(30) Priorität: 08.03.1991 CH 707/91
(43) Veröffentlichungstag der Anmeldung: 16.09.1992
(73) Patentinhaber: ELPATRONIC AG, CH-6300 Zug (CH)
(72) Erfinder: Portmann, Niklaus, CH-5454 Bellikon (CH); Taiana, Peter, CH-5053 Staffelbach (CH); D'Aniello, Alfonso, CH-8967 Widen (CH); Urech, Werner, CH-8434 Kaiserstuhl (CH)

(56) Entgegenhaltungen:
- EP-A- 0 278 098
- DE-B- 2 805 345
- DE-C- 4 020 182
- US-A- 3 546 655
- US-A- 3 596 225

## Beschreibung

Die Erfindung betrifft einen Rollenkopf für eine Widerstandsnahtschweißmaschine, mit einem Stator, mit einer Elektrodenrolle, die als Rotor an dem Stator drehbar gelagert ist, mit einer Gleitkontakt-Stromübertragungseinrichtung, die zwischen Stator und Rotor angeordnet und an wenigstens einen von ihnen durch Federkraft angepreßt ist, und mit Kanälen zum Hindurchleiten eines Kühlmittels, die im Stator, im Rotor und in der Gleitkontakt-Stromübertragungseinrichtung vorgesehen sind, wobei die Gleitkontakt-Stromübertragungseinrichtung aus wenigstens einer kreisringförmigen Scheibe besteht, die sich radial zwischen Rotor und Stator erstreckt und in ihrem zwischen Innen- und Außenumfang gelegenen Stegteil flexibel ausgebildet ist, nach EP-A-459 091 (Stand der Technik gemäß Art. 54(3) EPÜ).

Ein solcher Rollenkopf, der den Gegenstand des vorgenannten Patentanmeldung (im folgenden als Hauptpatent bezeichnet) bildet, stellt eine Verbesserung gegenüber Rollenköpfen der aus der US-A-3 546 655 und aus der US-A-3 596 225 bekannten Art dar, die als Ersatz für z.B. aus der CH-A-636 548 und der US-A-4 188 523 bekannte Flüssigkeits-Rollenköpfe nicht geeignet sind. Solche Flüssigkeits-Rollenköpfe werden zum Schweißen innerhalb von engen Dosenkörpern benutzt. Zwischen dem Stator und dem Rotor ist ein Ringspalt vorgesehen, in welchem sich ein flüssiges Metall befindet, beispielsweise Quecksilber oder eine Galliumlegierung, das zur Stromübertragung von dem Stator auf den Rotor dient. Da solche Rollenköpfe eine sorgfältige Abdichtung und eine ständige Kontrolle dieser Abdichtung erfordern und da die verwendeten flüssigen Metalle kein besonders guter Wärmeleiter und im Vergleich zu Kupfer auch kein guter elektrischer Stromleiter sind und sich überdies bei der Verwendung einer Galliumlegierung Probleme dadurch einstellen können, daß diese Metallegierung sich bereits bei nicht sehr weit unter der Raumtemperatur liegenden Temperaturen verfestigt, versucht man, die Flüssigkeit als Gleitkontakt-Stromübertragungseinrichtung zu vermeiden und durch nichtflüssige metallische Gleitkontakte zu ersetzen. Da die oben erwähnten bekannten Rollenköpfe mit innenliegender Gleitkontakt-Stromübertragungseinrichtung hinsichtlich des Stromübertragungsvermögens und der Lebensdauer aber den Flüssigkeits-Rollenköpfen unterlegen sind, weil sie aufwendige Bürstenkonstruktionen als Gleitkontakt-Stromübertragungseinrichtung oder als Bestandteil derselben aufweisen, ist der Rollenkopf gemäß dem Hauptpatent geschaffen worden, der mit den bislang verwendeten Flüssigkeits-Rollenköpfen, die er ersetzen soll, hinsichtlich Einbaumaßen, Stromübertragungsvermögen und Lebensdauer vergleichbar ist und außerdem in der Gleitkontakt-Stromübertragungseinrichtung zwischen Stator und Rotor einen Kontaktdruck aufweist, der durch Vibrationen, Exzentrizität usw. praktisch unbeeinflußt bleibt. Erreicht wird das dadurch, daß die Gleitkontakt-Stromübertragungseinrichtung aus wenigstens einer kreisringförmigen Scheibe besteht, die sich radial zwischen Rotor und Stator erstreckt und in ihrem zwischen Innen- und Außenumfang gelegenen Stegteil flexibel ausgebildet ist. Darüber hinaus kommt der Rollenkopf nach dem Hauptpatent mit einer minimalen Anzahl von Einzelteilen aus, was die Herstellungskosten, den Wartungsaufwand und den Verschleiß beträchtlich verringert.

Der praktische Einsatz des Rollenkopfes nach dem Hauptpatent hat gezeigt, daß ein großer Bedarf besteht, das Stromübertragungsprinzip dieses Rollenkopfes auf weiteren Gebieten nutzbar zu machen.

Es ist demgemäß Aufgabe der Erfindung, den Einsatzbereich des Rollenkopfes nach dem Hauptpatent zu erweitern.

Diese Aufgabe ist erfindungsgemäß bei einem Rollenkopf der eingangs genannten Art dadurch gelöst, daß für einen Einsatz des Rollenkopfes als Pendelrollenkopf, bei dem der Rotor als Welle ausgebildet ist, die an einem Ende die Elektrodenrolle trägt und mit dem anderen Ende in dem Stator des Pendelrollenkopfes drehbar gelagert ist, die Scheibe als Gleitkontakt-Stromübertragungseinrichtung im Bereich des anderen Endes der Welle zwischen der Welle und dem Stator angeordnet ist.

Im Grunde treten bei einem bekannten Pendelrollenkopf, wie er in den Fig. 4 und 5 dargestellt ist, die den Fig. 3 bzw. 4 der DE-C2-37 10 875 entsprechen, die gleichen Probleme wie bei den eingangs erwähnten bekannten Flüssigkeits-Rollenköpfen auf. Der Erfindung liegt die überraschende Erkenntnis zugrunde, daß das Stromübertragungsprinzip des Rollenkopfes nach dem Hauptpatent, bei dem es sich um einen sogenannten inneren Rollenkopf handelt, ohne weiteres auf einen bekannten Pendelrollenkopf der genannten Art übertragen werden kann, indem die bei diesem vorhandene Stromübertragung durch flüssiges Metall durch die kreisringförmige Scheibe mit flexibel ausgebildetem Stegteil ersetzt und diese Scheibe als Gleitkontakt-Stromübertragungseinrichtung im Bereich des anderen Endes der Welle des Pendelrollenkopfes zwischen der Welle und dem Stator des Pendelrollenkopfes angeordnet wird. Die Funktionen von Rotor und Stator werden dabei gegenüber dem Rollenkopf nach dem Hauptpatent vertauscht, d.h. bei dem Pendelrollenkopf ist nunmehr der Stator außen und der Rotor innen. Das bietet die gleichen Vorteile wie bei dem inneren Rollenkopf, nämlich die mit der Verwendung flüssigen Metalls verbundenen Probleme werden beseitigt, der Einfluß von äußeren mechanischen Einflüssen auf die Stromübertragung wird eliminiert, da der Stegteil der Gleitkontakt-Scheibe bei Exzentrizität, Vibrationen usw. axial und radial ausweichen kann, und auch der Pendelrollenkopf nach der Erfindung kommt mit einer minimalen Anzahl von Einzelteilen aus, was die Herstellungskosten, den Wartungsaufwand und den Verschleiß beträchtlich verringert. Zusätzlich läßt sich die Forderung erfüllen, daß die bestehende Konstruktion des Pendelrollenkopfes im wesentlichen nicht verändert zu werden braucht, so daß also bestehende Pendelrollenköpfe mit der erfindungsgemäßen Gleitkontakt-Stromübertragungseinrichtung nachgerüstet werden können, d.h. diese im Austausch für das flüssige Metall eingesetzt werden kann.

Vorteilhafte Ausgestaltungen der Erfindung bilden den Gegenstand der Unteransprüche.

In der Ausgestaltung der Erfindung nach Anspruch 2 ist der Aufbau des Stegteils besonders einfach und ermöglicht eine problemlose Übertragung von sehr hohen Schweißströmen.

Die Ausgestaltungen der Erfindung nach den Ansprüchen 3 bis 6 ermöglichen die zweckmäßige Wahl von im Gleitkontaktbereich eingesetzten Gleitkontaktringen. So lassen sich Kontaktringe aus Hartsilber fest mit einem flexiblen Kupfergeflecht verbinden (z.B durch Elektronenstrahlschweißung), die am Außenumfang wiederum in kupferne Kontaktringe gefaßt (verschweißt) sind. Anstelle von Hartsilber kann auch eine Verbindung von Silber/Graphit oder aber versilbertes oder vergoldetes Kupfer zur Anwendung gelangen. Wenn mit einem Zwischenring gearbeitet wird, so werden anstelle der Silberkontaktringe Kupferkontaktringe oder versilberte oder vergoldete Kupferkontaktringe an das flexible Kupfergeflecht geschweißt oder gelötet, und der Hartsilber- oder Silber/Graphit- oder versilberte/vergoldete Zwischenring wird als billiges Verschleißteil an dem Stator oder Rotor festgeklemmt.

Die Ausgestaltung der Erfindung nach den Ansprüchen 7 und 8 ermöglicht die Verwendung einer Scheibe ohne Eigensteifigkeit, da sich die Scheibenanpreßfederkraft einfach durch eine Tellerfeder erzeugen läßt.

In der Ausgestaltung der Erfindung nach den Ansprüchen 9 und 10 erfolgt die Kühlung des Pendelrollenkopfes durch eine spezielle ölhaltige Emulsion, die die Gleitkontaktflächen nicht nur intensiv kühlt, sondern zusätzlich auch schmiert. Gegenüber gewöhnlichem Wasser hat ein solches Kühlmittel den Vorteil, daß die Kontakte nicht durch Kalk oder sonstige Verunreinigungen verschmutzt werden. Die verwendete Emulsion ist stabil und vor allem lebensmitteltauglich.

Ein Ausführungsbeispiel der Erfindung wird im folgenden unter Bezugnahme auf die Zeichnungen näher beschrieben. Es zeigt
- Fig. 1: einen inneren Rollenkopf gemäß dem Hauptpatent,
- Fig. 2: eine Teillängsschnittansicht eines erfindungsgemäßen Pendelrollenkopfes mit der gleichen Gleitkontakt-Stromübertragungseinrichtung wie der Rollenkopf nach Fig. 1,
- Fig. 3: eine vergrößerte Darstellung einer Einzelheit des Pendelrollenkopfes nach Fig. 2, aus der der Aufbau einer als Gleitkontakt-Stromübertragungseinrichtung dienenden kreisringförmigen Scheibe besser ersichtlich ist,
- Fig. 4: einen bekannten Pendelrollenkopf für eine Widerstandsnahtschweißmaschine und
- Fig. 5: eine Teillängsschnittansicht des Pendelrollenkopfes nach Fig. 4.

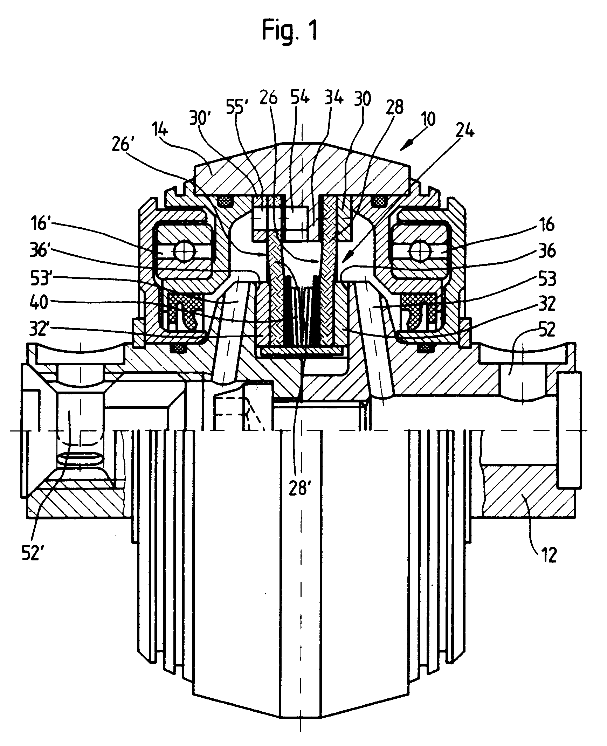

Fig. 1 zeigt eine Schnittansicht eines aus dem eingangs erwähnten Hauptpatent bekannten Rollenkopfes 10 für eine nicht dargestellte Widerstandsnahtschweißmaschine zum Widerstands-Rollennahtschweißen von Dosenkörpern. Der Rollenkopf 10 hat einen als zweiteilige Achse ausgebildeten Stator 12, auf dem ein Rotor 14 mittels Kugellagern 16, 16' drehbar gelagert ist. (Gleiche, aber mit einem hochgesetzten Strich versehene Bezugszahlen bezeichnen jeweils das andere Teil eines Paares von gleich ausgebildeten Teilen.)

Der Stator 12 wird an dem freien Ende eines ebenfalls nicht dargestellten Schweißarms der Widerstandsnahtschweißmaschine elektrisch gut leitend festgeklemmt. Der Schweißarm und der Stator 12 führen im Betrieb der Widerstandsnahtschweißmaschine den Schweißstrom und bestehen deshalb (ebenso wie der Rotor 14) aus elektrisch gut leitendem Werkstoff, vorzugsweise aus Kupfer. Dieser Schweißstrom ist von dem Stator 12 auf den Rotor 14 zu übertragen, der ihn, vorzugsweise über einen nicht dargestellten Elektrodendraht zur Schweißstelle überträgt. Zur Stromübertragung zwischen Stator und Rotor ist eine insgesamt mit 24 bezeichnete Gleitkontakt-Stromübertragungseinrichtung vorgesehen, die zwei kreisringförmige Scheiben 26, 26' aufweist, welche sich in gegenseitigem axialen Abstand radial zwischen Rotor und Stator erstrecken und in ihrem zwischen Innen- und Außenumfang gelegenen Stegteil 28, 28' flexibel ausgebildet sind.

Die beiden flexiblen Gleitkontakt-Scheiben 26, 26' bestehen jeweils aus einem Kupfergeflecht, an dem am Außenumfang der Scheibe jeweils ein Kontaktring 30, 30' auf dem Stegteil 28, 28' axial befestigt (z.B. verschweißt) ist und an dem am Innenumfang der Scheibe jeweils ein Axialgleitkontaktring 32, 32' auf dem Stegteil axial befestigt (z.B. elektronenstrahlverschweißt) ist. Der Rotor 14 hat an seinem Innenumfang einen Flansch 34, an dem die Scheiben 26, 26' mittels nicht dargestellter Schrauben elektrisch gut leitend befestigt sind. Jeder Axialgleitkontaktring 32, 32' ist mit einer zugeordneten ringförmigen Kontaktfläche 36, 36' des Stators in Gleitkontakt. Zum Anpressen der Scheiben 26, 26' an den Stator 12 ist zwischen den Scheiben eine Federeinrichtung in Form eines Tellerfederpakets 40 vorgesehen. Dessen Tellerfedern erzeugen den notwendigen Kontaktdruck zwischen den Axialgleitkontaktringen 32, 32' und den diesen zugeordneten ringförmigen Kontaktflächen 36, 36' des Stators 12.

Der Innenraum zwischen dem Stator 12 und dem Rotor 14 ist auf in Fig. 1 dargestellte Weise mittels O-Ringen und Wellendichtungen abgedichtet. Da der Rotor 14 und die Gleitkontaktflächen intensiv gekühlt werden müssen, sind zum Hindurchleiten eines Kühlmittels durch den Rollenkopf 10 Kanäle 52, 52' und 53, 53' im Stator 12, Kanäle 54 im Rotor 14 und Kanäle 55' in den flexiblen Gleitkontakt-Scheiben vorgesehen (den Kanälen 55' entsprechende Kanäle, die in der Scheibe 26 vorgesehen sind, sind in Fig. 1 nicht sichtbar). Kühlmittel wird im Betrieb der Widerstandsnahtschweißmaschine in den Kanal 52 eingeleitet und strömt durch den Kanal 53, durch die nicht sichtbaren Kanäle der Scheibe 26, durch die Kanäle 54 und 55' und schließlich zurück durch die Kanäle 53' und 52'.

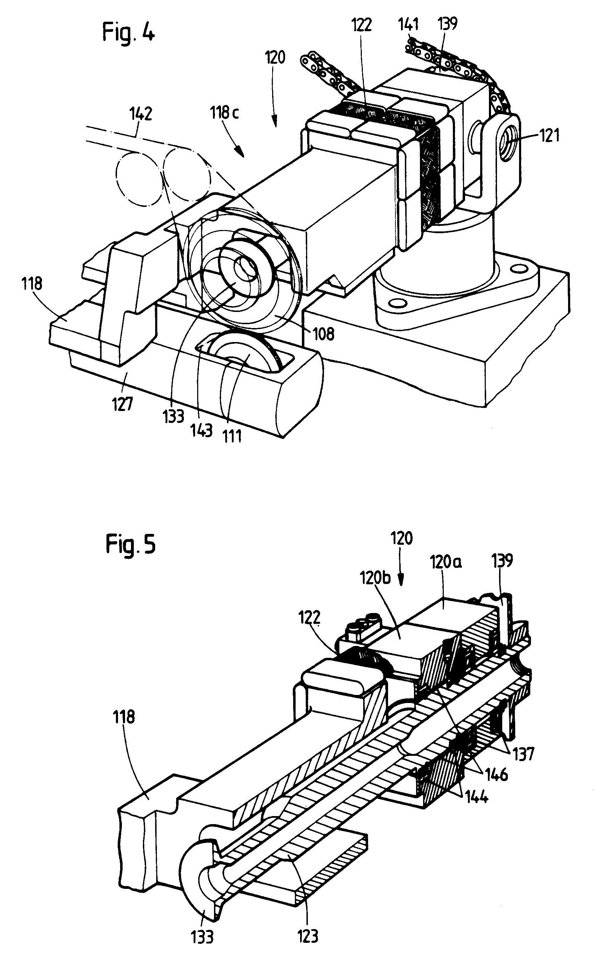

Im folgenden wird nun der Einsatz des vorstehend beschriebenen Rollenkopfes als Pendelrollenkopf beschrieben, genauer gesagt, die Verwendung der Gleitkontakt-Stromübertragungseinrichtung des vorstehend beschriebenen Rollenkopfes als Ersatz für die mit flüssigem Metall arbeitende Stromübertragungseinrichtung eines bekannten Pendelrollenkopfes. Zum besseren Verständnis wird zunächst ein aus der DE-C2-37 10 875 bekannter Pendelrollenkopf unter Bezugnahme auf die Fig. 4 und 5 näher beschrieben.

Fig. 4 zeigt einen Pendelrollenkopf 120 einer nur teilweise dargestellten Widerstandsnahtschweißmaschine zum Schweißen von Dosenrümpfen. Zargen für die zu formenden Dosenrümpfe werden in zylindrische Form gebracht, mittels einer nicht dargestellten Z-Schiene an der Stelle der herzustellenden Längsnaht zur Überlappung gebracht und in diesem Zustand zur Längsnahtschweißung zwischen eine obere Elektrodenrolle 108 und eine untere Elektrodenrolle 111 mittels einer ebenfalls nicht sichtbaren, Transportklinken tragenden Transportkette eingeführt. All das ist bekannt, z.B. aus der auf die Anmelderin selbst zurückgehenden DE-OS 25 59 671, und braucht deshalb hier nicht näher beschrieben zu werden.

Über eine erste Stromschiene 118 wird der Schweißstrom aus einem nicht dargestellten Schweißtransformator zugeführt. Eine Hälfte 120b eines Stators des Pendelrollenkopfes 120 ist mit einem benachbarten Teil 118c der ersten Stromschiene 118 durch flexible Strombänder 122 auf weiter unten noch näher erläuterte Weise elektrisch leitend verbunden. Der Pendelrollenkopf 120 hat einen Pendelarm 123 in Form einer mit einem Tragflansch 133 versehenen hohlen Welle, die an ihrem einen Ende in der anderen, rechten Hälfte 120a des Stators drehbar gelagert ist und an ihrem anderen Ende die obere Elektrodenrolle 108 trägt. Die Elektrodenrolle 108 benötigt in ihrem Inneren lediglich eine Kühlung, wofür Kühlflüssigkeit (z.B. Wasser) über die hohle Welle 123 zugeführt und abgeleitet wird. Die Elektrodenrolle 108 enthält aber keine Gleitkontakt-Stromübertragungseinrichtung wie der Rollenkopf 10 nach Fig. 1, da die Stromübertragung bereits auf die rotierende Welle 123 im Bereich des Stators 120a, 120b des Pendelrollenkopfes 120 erfolgt.

Die elektrische Rückleitung, d.h. die von der unteren Elektrodenrolle 111 zurück zum Schweißtransformator führende elektrische Leitung besteht aus einem an einem Ende die untere Elektrodenrolle 111 tragenden und am anderen Ende mit einer zweiten, zum Schweißtransformator führenden Stromschiene (nicht dargestellt) verbundenen Unterarm 127.

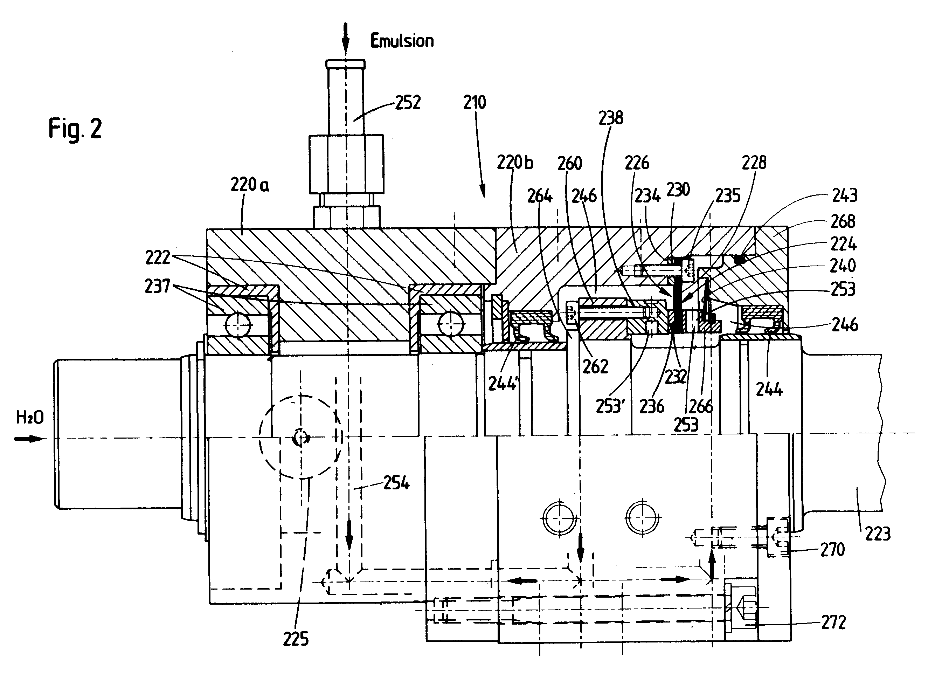

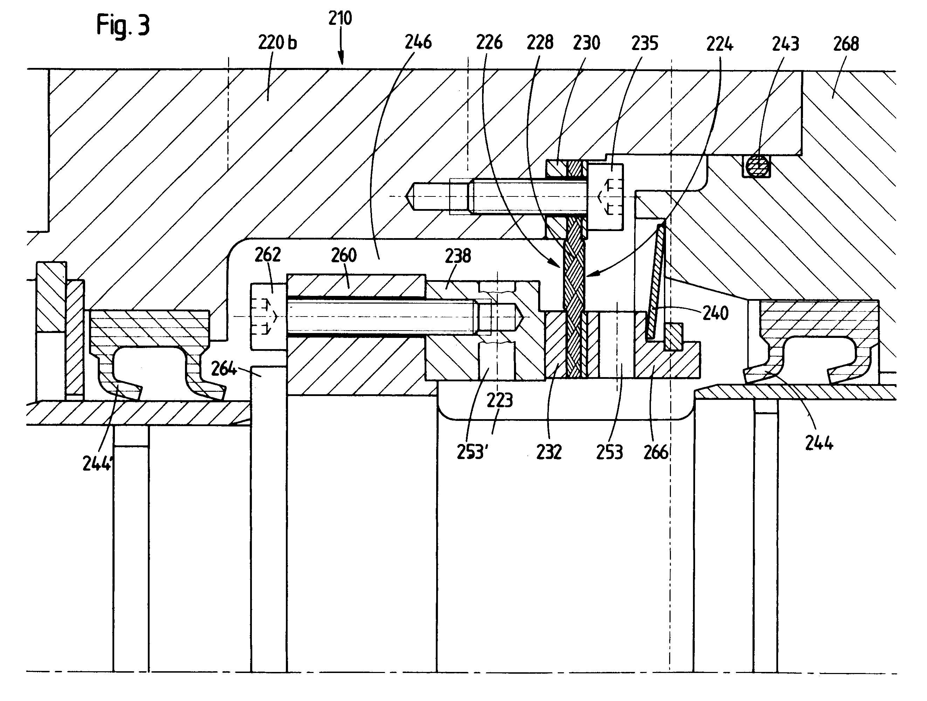

Der Pendelrollenkopf 120 ist nach dem Prinzip einer austarierten Waage aufgebaut, dergestalt, daß seine Pendellagerung 121 das gesamte Gewicht trägt und die obere Elektrodenrolle 108 praktisch gewichtsfrei auf der unteren Elektrodenrolle 111 ruht. Zum Einstellen einer bestimmten Andrückkraft ist eine nicht dargestellte Feder vorgesehen, die von oben her auf die Achse der oberen Elektrodenrolle 108 drückt. An dem anderen Ende des Pendelarms 123, das in der rechten Hälfte 120a des Stators des Pendelrollenkopfes 120 drehbar gelagert ist, ist ein Zahnkranz 139 befestigt, über den mittels einer Kette 141 der Pendelarm 123 und damit die obere Elektrodenrolle 108 in Drehung versetzbar ist. Über die obere Elektrodenrolle 108 ist eine Drahtelektrode 142 geführt. Eine gleiche Drahtelektrode 143 ist über die untere Elektrodenrolle 111 geführt. Diese Drahtelektroden dienen dem Zweck, die Verunreinigung der Elektrodenrollen durch das Eingehen einer Verbindung mit Metall des Schweißgutes (z.B. Zinn, wenn Dosenrümpfe aus Weißblech zu schweißen sind) zu verhindern, was aus der oben erwähnten DE-OS 25 59 671 und aus der ebenfalls auf die Anmelderin zurückgehenden DE-Patentschrift 35 16 397 bekannt ist und daher ebenfalls hier nicht weiter erläutert zu werden braucht. Die rechte Hälfte 120a des Stators des Pendelrollenkopfes 120 enthält gemäß Fig. 5 Wälzlager 137 zur Drehlagerung des Pendelarms 123. Die in Fig. 5 links dargestellte Hälfte 120b des Stators enthält zwischen zwei Dichtringen 144 eine Ringkammer 146, welche mit Flüssigmetall gefüllt ist, das zur Stromübertragung vom Stator auf den Pendelarm 124 dient. Diese Stromübertragung durch das in der Ringkammer enthaltene Flüssigmetall wird auf im folgenden beschriebene Weise durch eine Stromübertragung nach dem Prinzip des in Fig. 1 dargestellten Rollenkopfes 10 ersetzt, wozu nun auf die Fig. 2 und 3 Bezug genommen wird.

In den Fig. 2 und 3 tragen gleiche Teile wie in den Fig. 1, 4 und 5 gleiche, jedoch um 200 bzw. 100 erhöhte Bezugszahlen. Außerdem ist die Darstellung in den Fig. 2 und 3 spiegelbildlich zu der in den Fig. 4 und 5. So befindet sich die Statorhälfte 220a in den Fig. 2 und 3 links statt rechts von der Statorhälfte 220b.

Die Hälfte 220a des Stators enthält die Wälzlager 237 zur Drehlagerung des Pendelarms 223. Die Wälzlager 237 sind von der Hälfte 220a des Stators mittels Isolierstoffbüchsen 222 elektrisch isoliert. Die Stromübertragung auf die Hälfte 220b des Stators, die von dessen Hälfte 220a isoliert sein kann, erfolgt mittels in den Fig. 2 und 3 nicht dargestellter Strombänder auf mit Bezug auf die Fig. 4 und 5 beschriebene Weise. Der Pendelarm 223 ist wiederum als hohle Welle mit einer Bohrung 225 ausgebildet. Über die Bohrung 225 wird der Elektrodenrolle, die am rechten, in den Fig. 2 und 3 nicht sichtbaren Ende des Pendelarms 223 befestigt ist, Wasser über das in Fig. 2 links dargestellte Ende zugeführt, das auch über die Bohrung 225 und das linke Ende auf nicht näher dargestellte Weise wieder abgeleitet wird.

Die rechte Hälfte 220b des Stators führt den Schweißstrom und besteht deshalb ebenso wie der Pendelarm 223 aus elektrisch gut leitendem Werkstoff, vorzugsweise aus Kupfer. Dieser Schweißstrom ist von der Statorhälfte 220b auf den als hohle Welle 223 mit angeflanschter Elektrodenrolle ausgebildeten Rotor zu übertragen, wobei die Elektrodenrolle den Schweißstrom zur Schweißstelle überträgt, wie oben mit Bezug auf Fig. 4 beschrieben. Zur Stromübertragung zwischen Stator und Rotor ist eine insgesamt mit 224 bezeichnete Gleitkontakt-Stromübertragungseinrichtung vorgesehen, die eine kreisringförmige Scheibe 226 aufweist, welche sich zwischen Stator und Rotor erstreckt und in ihrem zwischen Innen- und Außenumfang gelegenen Stegteil 228 flexibel ausgebildet ist.

Die flexible Gleitkontakt-Scheibe 226 besteht aus einem Kupfergeflecht, an dem am Außenumfang der Scheibe ein Kontaktring 230 auf dem Stegteil 228 axial befestigt (z.B. verschweißt) ist und am Innenumfang der Scheibe ein Axialgleitkontaktring 232 auf dem Stegteil axial befestigt (z.B. elektronenstrahlverschweißt) ist. Die Hälfte 220b des Stators ist mit einer ringförmigen Schulter 234 versehen, an der die Scheibe 226 mittels Schrauben 235 elektrisch gut leitend befestigt ist. Der Axialgleitkontaktring 232 ist mit einer zugeordneten ringförmigen Kontaktfläche 236 des Pendelarms 223 in Gleitkontakt. Der Pendelarm 223 ist mit einem Gegenkontaktring 238 versehen, der somit auch ein Teil der Gleitkontakt-Stromübertragungseinrichtung 224 ist und die ringförmige Kontaktfläche 236 aufweist. In dem dargestellten Ausführungsbeispiel ist der Gegenkontaktring 238 mit einem weiteren Ringbund 260 mittels Schrauben 262 verschraubt, wobei der Ringbund 260 mit der Welle 223 drehfest verbunden ist und sich auf der in Fig. 2 linken Seite an einem Flansch 264 der Welle 223 abstützt. Der Ringbund 260 ist mit der Welle 223 elektrisch gut leitend verbunden und besteht ebenso wie der Gegenkontaktring 238 vorzugsweise aus Kupfer. Zum Anpressen des Axialgleitkontaktringes 232 an die ringförmige Kontaktfläche 236 dient eine Tellerfeder 240. Die Tellerfeder drückt an ihrem radial inneren Ende gegen einen Anpreßring 266, der einen weiteren, stationären Teil der Gleitkontakt-Stromübertragungseinrichtung 224 bildet und seinerseits gegen die Scheibe 226 drückt, um den notwendigen Kontaktdruck zwischen dem Axialgleitkontaktring 232 und der diesem zugeordneten ringförmigen Kontaktfläche 236 zu erzeugen. Die Tellerfeder 240 stützt sich mit ihrem radial äußeren Ende an der Innenseite eines Verschlußdeckels 268 ab, der in die Hälfte 220b des Stators eingepaßt und mittels Schrauben 270 daran befestigt ist. Die Statorhälften 220a und 220b sind mittels Schrauben 272 aneinander befestigt.

Die Ringkammer 246 in der Statorhälfte 220b ist auf in Fig. 2 dargestellte Weise mit Hilfe eines O-Ringes 243 und mittels Wellendichtungen 244, 244' abgedichtet. Da die Gleitkontakt-Stromübertragungseinrichtung 224 sowie der Rotor 223 und der Stator 220a, 220b gekühlt werden müssen, sind zum Hindurchleiten eines Kühlmittels durch den Pendelrollenkopf 210 Kanäle 252 und 254 im Stator und Kanäle 253 und 253' im stationären Anpreßring 266 bzw. im mit der Welle 223 umlaufenden Gegenkontaktring 238 vorgesehen. Diese Kanäle haben keine Verbindung mit der Bohrung 225 der Welle 223, so daß hier ein anderes Kühlmittel als für die Elektrodenrolle eingesetzt werden kann. Dieses andere Kühlmittel wird über den Kanal 252 in den Stator eingeleitet, strömt durch den Kanal 254 in die Ringkammer 246, in welcher sich die Gleitkontakt-Stromübertragungseinrichtung 224 befindet, geht durch die Kanäle 253 und die Kanäle 253' hindurch und gelangt zu einem nicht dargestellten Auslaß, was alles durch Pfeile in Fig. 2 angedeutet ist. Der Kreislauf der Emulsion ist so von dem Kreislauf des Kühlwassers völlig getrennt.

Zur Kühlung und gleichzeitigen Schmierung wird eine stabile und vor allem lebensmitteltaugliche Emulsion als Kühlmittel verwendet, die aus 82% Wasser, 15% Rapsöl und 3% Emulgator besteht. Der Emulgator ML-55-F der Hefti AG, Zürich, hat sich als besonders geeignet erwiesen. Nähere Einzelheiten über diesen Emulgator finden sich auf dem technischen Datenblatt Nr. 3.201-d der Hefti AG.

Zur Herstellung der Emulsion werden Wasser, Rapsöl und Emulgator zusammengeschüttet und in einer eigens dafür vorgesehenen Mischeinheit (Leitstrahlmischer, evtl. mit Dispergierkopf) wenige Minuten vermengt, bis eine einwandfreie Mischung erreicht ist. Falls eine solche Mischeinheit nicht zur Verfügung stehen sollte, kann die Emulsion auch mit einer an der Widerstandsnahtschweißmaschine angebauten Kühleinheit hergestellt werden. Der Vorgang wäre derselbe, jedoch beträgt die Zeit der Vermischung dann 10 - 18 Stunden. Die Temperatur während des Mischvorganges sollte stets zwischen 15 und 50 Grad Celsius betragen. Zur Verlängerung der Haltbarkeit kann der Emulsion ggf. ein Stabilisator beigemischt werden (wie bei Kühl- und Schmiermitteln von Werkzeugmaschinen). Die Temperatur während der Lagerung der Emulsion sollte zwischen 15 und 50 Grad Celsius liegen.

Falls die Menge der Emulsion während der Dosenproduktion zu stark abnehmen sollte (z.B. wegen Verdunstung), könnte diese, ohne die Produktion zu unterbrechen, einfach in den Bestandteilen Wasser, Rapsöl und Emulgator der Kühleinheit zugegeben werden.

Beim Verkauf der Emulsion besteht aus Transportgründen weiter die Möglichkeit, die Emulsion in Form eines Konzentrats herzustellen. Dieses Konzentrat kann so zusammengesetzt sein, daß es vom Verbraucher nur noch im Verhältnis von z.B. 1:4 mit Wasser anzurühren wäre (Konzentrat: Rapsöl 75%, Emulgator 15% und Wasser 10%).

Der Axialgleitkontaktring 232 besteht vorzugsweise aus Hartsilber oder Silber/Graphit. Er kann aber auch aus Kupfer bestehen und an das flexible Kupfergeflecht, das den Stegteil 228 der Scheibe 226 bildet, angeschweißt oder angelötet sein. Die zugeordnete ringförmige Kontaktfläche 236, die an dem Gegenkontaktring 238 gebildet ist, kann aus Kupfer, aus Hartsilber, aus Silber/Graphit oder aus versilbertem/vergoldetem Kupfer gebildet sein. Kontaktringe aus Kupfer sind mit dem Kupfergeflecht des Stegteils 228 besser verschweiß- oder verlötbar.

In der in den Fig. 2 und 3 dargestellten Ausführungsform ist der Kontaktring 230 am Stator befestigt, und die Stromübertragung erfolgt von dem stationären Axialgleitkontaktring 232 auf den Pendelarm 223. Statt dessen könnte aber auch der Kontaktring 230 innen vorgesehen und an der Welle 223 befestigt sein, und der Axialgleitkontaktring 232 könnte radial außen angeordnet sein, so daß an dieser Stelle die Stromübertragung vom Stator auf die flexible Scheibe 226 erfolgen würde. Diese Variante ist ebenso wie die übrigen Varianten der Gleitkontakt-Stromübertragungseinrichtung, welche den Gegenstand des Hauptpatents bilden, bei dem hier beschriebenen Pendelrollenkopf ohne weiteres anwendbar, ohne daß das hier näher dargestellt oder beschrieben zu werden braucht. Insbesondere ist auch bei dem Pendelrollenkopf zur Stromübertragung eine Scheibe einsetzbar, die wie bei dem Rollenkopf gemäß Hauptpatent statt eines Stegteils aus Kupfergeflecht einen Stegteil aus federnden Speichen hat, wobei die gesonderte Federeinrichtung 240 nicht erforderlich ist.

## Patentansprüche

1. Rollenkopf für eine Widerstandsnahtschweißmaschine, mit einem Stator, mit einer Elektrodenrolle, die als Rotor an dem Stator drehbar gelagert ist, mit einer Gleitkontakt-Stromübertragungseinrichtung, die zwischen Stator und Rotor angeordnet und an wenigstens einen von ihnen durch Federkraft angepreßt ist, und mit Kanälen zum Hindurchleiten eines Kühlmittels, die im Stator, im Rotor und in der Gleitkontakt-Stromübertragungseinrichtung vorgesehen sind, wobei die Gleitkontakt-Stromübertragungseinrichtung aus wenigstens einer kreisringförmigen Scheibe besteht, die sich radial zwischen Rotor und Stator erstreckt und in ihrem zwischen Innen- und Außenumfang gelegenen Stegteil flexibel ausgebildet ist, und wobei für einen Einsatz des Rollenkopfes als Pendelrollenkopf (210), bei dem der Rotor als Welle (223) ausgebildet ist, die an einem Ende die Elektrodenrolle trägt und mit dem anderen Ende in dem Stator (220a) des Pendelrollenkopfes (210) drehbar gelagert ist, die Scheibe (226) als Teil der Gleitkontakt-Stromübertragungseinrichtung (224, 238, 266) im Bereich des anderen Endes der Welle (223) zwischen der Welle (223) und dem Stator (220a, 220b) angeordnet ist.

2. Rollenkopf nach Anspruch 1, dadurch gekennzeichnet, daß der Stegteil (228) aus einem Kupfergeflecht besteht.

3. Rollenkopf nach Anspruch 1 oder 2**,** dadurch gekennzeichnet, daß die Scheibe (226) wenigstens am Innen- oder Außenumfang mit einem Kontaktring (230, 232) versehen und am anderen Umfang am Rotor oder Stator (220a, 220b) befestigt ist.

4. Rollenkopf nach Anspruch 3, dadurch gekennzeichnet, daß die Scheibe (226) am Innen- und Außenumfang mit einem Kontaktring (230, 232) versehen ist, der auf dem Stegteil (228) axial befestigt ist.

5. Rollenkopf nach Anspruch 3 oder 4, dadurch gekennzeichnet, daß wenigstens ein Kontaktring (232) der Scheibe (226) ein Axialgleitkontaktring ist, der mit einer ringförmigen Kontaktfläche (236) des Stators (220a, 220b) oder Rotors in axialem Gleitkontakt ist.

6. Rollenkopf nach Anspruch 5, dadurch gekennzeichnet, daß der Axialgleitkontaktring (232) aus Hartsilber oder Silber/Graphit oder versilbertem/vergoldetem Kupfer und die zugeordnete ringförmige Kontaktfläche (236) aus Kupfer oder vergoldetem Kupfer besteht.

7. Rollenkopf nach Anspruch 5 oder 6, dadurch gekennzeichnet, daß zum Erzeugen der Scheibenanpreßfederkraft eine Federeinrichtung (240) auf der von der zugeordneten ringförmigen Kontaktfläche (236) abgewandten Seite des Axialgleitkontaktringes (232) angeordnet und am Stator oder Rotor (220a, 220b) abgestützt ist.

8. Rollenkopf nach Anspruch 7, dadurch gekennzeichnet, daß die Federeinrichtung aus wenigstens einer Tellerfeder (240) besteht.

9. Rollenkopf nach einem der Ansprüche 1 bis 8, dadurch gekennzeichnet, daß das Kühlmittel eine ölhaltige Emulsion ist, die zugleich als Schmiermittel dient.

10. Rollenkopf nach Anspruch 9, dadurch gekennzeichnet, daß die Emulsion aus 82% Wasser, 15% Rapsöl und 3% Emulgator besteht.

## Claims

1. Roller head for a resistance seam welding machine, comprising a stator, an electrode roller rotatably mounted as a rotor on the stator, a sliding contact current transmission device arranged between the rotor and the stator and urged against at least one of them by spring force, and ducts for passage of a coolant in the stator, rotor and sliding contact current transmission device, the sliding contact current transmission device comprising at least one circular disc which extends radially between the rotor and the stator and is flexibly designed in its intermediate bridging part between the inner and outer circumferences, and, for the roller head to be used as a pendulum roller head (210), where the rotor is in the form of a shaft (223) carrying the electrode roller at one end and rotatably mounted by the other end in the stator (220a) of the pendulum roller head (210), the disc (226) being arranged as part of the sliding contact current transmission device (224, 238, 266), in the region of the other end of the shaft (223) between the shaft (223) and the stator (220a, 220b).

2. Roller head according to claim 1, characterised in that the bridging part (228) consists of a copper braid.

3. Roller head according to claim 1 or 2, characterised in that the disc (226) is provided with a contact ring (230, 232) at least on the inner or outer circumference, and at the other circumference is fastened to the rotor or stator (220a, 220b).

4. Roller head according to claim 3, characterised in that the disc (226) is provided on the inner and outer circumferences with a contact ring (230, 232) which is fastened axially on the bridging part (228).

5. Roller head according to claim 3 or 4, characterised in that at least one contact ring (232) of the disc (226) is an axial sliding contact ring, which is in axial sliding contact with an annular contact surface (236) of the stator (220a, 220b) or rotor.

6. Roller head according to claim 5, characterised in that the axial sliding contact ring (232) is composed of nickel silver or silver/graphite or silver-plated/gold-plated copper, and the associated annular contact surface (236) is composed of copper or gold-plated copper.

7. Roller head according to claim 5 or 6, characterised in that in order to generate a spring force for applying contact pressure to the disc, a spring device (240) is arranged on the side of the axial sliding contact ring (232) that is remote from the associated annular contact surface (236), and is supported against the stator or rotor (220a, 220b).

8. Roller head according to claim 7, characterised in that the spring device is composed of at least one disc spring (240).

9. Roller head according to any of claims 1 to 8, characterised in that the coolant is an emulsion containing oil which at the same time acts as a lubricant.

10. Roller head according to claim 9, characterised in that the emulsion is 82% water, 15% rapeseed oil and 3% emulsifier.

## Revendications

1. Tête porte-molette, pour machine de soudage par résistance pour joint continu, comprenant un stator, une molette formant électrode, montée d'une manière rotative sur le stator en constituant un rotor, un dispositif de transmission de courant à contact glissant, disposé entre le stator et le rotor et appliqué sur au moins l'un de ces derniers par une force élastique, et des conduits permettant l'introduction d'un agent de refroidissement et ménagés dans le stator, dans le rotor et dans le dispositif de transmission de courant à contact glissant, tête dans laquelle ce dernier dispositif est constitué d'au moins un disque en forme d'anneau circulaire qui s'étend radialement entre le rotor et le stator et est réalisé flexible dans sa partie formant âme qui est située entre sa périphérie intérieure et sa périphérie extérieure et dans laquelle, pour une utilisation de la tête porte-molette en tant que tête porte-molette flottante (210), pour laquelle le rotor est réalisé sous la forme d'un arbre (223) qui, à une extrémité, porte la molette formant électrode et, à l'autre extrémité, est monté rotatif dans le stator (220a) de la tête porte-molette flottante (210), le disque (226) est disposé, en tant que partie du dispositif de transmission de courant à contact glissant (224, 238, 266), dans la zone de l'autre extrémité de l'arbre (223) et entre cet arbre (223) et le stator (220a, 220b).

2. Tête porte-molette suivant la revendication 1, caractérisée en ce que la partie d'âme (228) est en tresse de fils de cuivre.

3. Tête porte-molette suivant l'une des revendications 1 et 2, caractérisée en ce que le disque (226) est pourvu, au moins sur sa périphérie intérieure ou sur sa périphérie extérieure, d'un anneau de contact (230, 232) et en ce que, par son autre périphérie, il est fixé sur le rotor ou sur le stator (220a, 220b).

4. Tête porte-molette suivant la revendication 3, caractérisée en ce qu'à sa périphérie intérieure et à sa périphérie extérieure, le disque (226) est pourvu d'un anneau de contact (230, 232) qui est fixé axialement sur la partie d'âme (228).

5. Tête porte-molette suivant l'une des revendications 3 et 4, caractérisée en ce qu'au moins un anneau de contact (232) du disque (226) est un anneau de contact glissant axial qui est en contact glissant axial avec une surface annulaire de contact (236) du stator (220a, 220b) ou du rotor.

6. Tête porte-molette suivant la revendication 5, caractérisée en ce que l'anneau de contact glissant axial (232) est en argent dur ou en argent/graphite ou en cuivre argenté/doré et la surface annulaire de contact (236) associée est en cuivre ou en cuivre doré.

7. Tête porte-molette suivant l'une des revendications 5 et 6, caractérisée en ce que, pour produire la force élastique d'application du disque, un dispositif élastique (240) est disposé sur la face de l'anneau de contact glissant axial (232) qui est située à l'opposé de la surface annulaire de contact (236) associée et prend appui sur le stator ou le rotor (220a, 220b).

8. Tête porte-molette suivant la revendication 7, caractérisée en ce que le dispositif élastique est constitué d'au moins une rondelle Belleville( 240).

9. Tête porte-molette suivant l'une des revendications 1 à 8, caractérisée en ce que l'agent de refroidissement est une émulsion contenant de l'huile qui sert en même temps de lubrifiant.

10. Tête porte-molette suivant la revendication 9, caractérisée en ce que l'émulsion comprend 82 % d'eau, 15 % d'huile de colza et 3 % d'émulsifiant.
